# EUROPEAN PATENT APPLICATION

(11) **EP 4 575 022 A1**
(43) Date of publication of application: **25.06.2025**
(21) Application number: 23219982.8
(22) Date of filing: 22.12.2023
(51) Int. Cl.: C22B 3/00, C01D 15/08, C22B 26/12, C22B 3/38, C22B 7/00, H01M 10/54, H01M 4/525, H01M 4/58

(54) **A METHOD OF USING A WET METHOD TO RECYCLE METAL ELEMENTS IN LITHIUM BATTERIES**

(30) Priority: 18.12.2023 CN 202311736321
(71) Applicant: Shenzhen Huineng Energy Storage Materials Engineering Research Center Co., Ltd, Shenzhen, Guangdong 518000 (CN); National Engineering Research Center of Advanced Energy Storage Materials (Shenzhen) Co., Ltd, Shenzhen, Guangdong 518000 (CN)
(72) Inventor: ZHONG, Faping, Shenzhen City, 518000 (CN); HE, Chihuan, Shenzhen City, 518000 (CN); JIANG, Subin, Shenzhen City, 518000 (CN); LIU, Hongbing, Shenzhen City, 518000 (CN); ZHU, Jiqun, Shenzhen City, 518000 (CN); TAN, Shuifa, Shenzhen City, 518000 (CN)
(74) Representative: AWA Sweden AB

(57) **Abstract**

The present invention provides a method of using a wet method to recycle metal elements in lithium batteries, including the following steps: Step 1, pretreating lithium batteries, so as to obtain a mixture of powders containing positive-electrode materials; Step 2, acid leaching to obtain leachate; Step 3, if the to-be-recycled lithium battery contain a lithium iron phosphate battery, the solid products, obtained after acid leaching and solid-liquid filtration, are heated in an oxygen-containing atmosphere, so as to burn up carbon, then the left is ferric phosphate; Step 4, if the to-be-recycled lithium battery contains a ternary lithium battery, the leachate, obtained after acid leaching and solid-liquid filtration, is sent to an extraction step, wherein diisooctyl phosphate is used as extraction agent, so as to obtain a raffinate containing Li element and an organic phase containing Ni/Co/Mn elements.

## Description

### Technical Field

The present invention refers to a method of using a wet method to recycle metal elements in lithium batteries.

### Background

Discarded lithium batteries contain many environmentally harmful substances, such as heavy metals, electrolytes (LiPF₆), phenyl compounds, and ester compounds, which are difficult to degrade and are highly toxic.

Toxic substances in discarded lithium batteries cause damages to the environment. If untreated, heavy metals in cathode materials may contaminate soil and groundwater, graphite may generate dusts and thus cause air pollution. If improperly treated, electrolyte may cause fluorine pollution and organic pollution, the separator film is difficult to degrade and thus forms white pollution.

Besides, discarded lithium batteries contain many valuable metals (such as lithium, nickel, cobalt, manganese, copper, iron, aluminum, etc.). Therefore, it is of great value to efficiently recycle metals from lithium batteries .

However, the existing technologies of recycling lithium batteries have many shortcomings, such as complicated treatment processes, low recycling efficiency, high recycling costs, etc. Thus, we need to develop further improvement.

### Summary

The invention is set out in the appended set of claims.

A method of using a wet method to recycle metal elements in lithium batteries, including the following steps:
Step 1, pretreating lithium batteries, so as to obtain a mixture of powders containing positive-electrode materials;
Step 2, acid leaching to obtain leachate;
Step 3, if the to-be-recycled lithium battery contain a lithium iron phosphate battery, the solid products, obtained after acid leaching and solid-liquid filtration, are heated in an oxygen-containing atmosphere, so as to burn up carbon, then the left is ferric phosphate;
Step 4, if the to-be-recycled lithium battery contains a ternary lithium battery, the leachate, obtained after acid leaching and solid-liquid filtration, is sent to an extraction step, wherein diisooctyl phosphate is used as extraction agent, so as to obtain a raffinate containing Li element and an organic phase containing Ni/Co/Mn elements.

Optionally, the Step 4 further includes that the back-extraction is performed on the organic phase containing Ni/Co/Mn elements, wherein sulfuric acid aqueous solution is used as the back-extraction agent, so as to obtain a first stripping solution containing Ni/Co/Mn elements.

Optionally, the Step 4 further includes that by adding a precipitating agent of sodium carbonate into the raffinate containing Li element, precipitation of lithium carbonate is obtained.

Optionally, the ferric phosphate obtained by Step 3 is used as a raw material for preparing positive-electrode active material for lithium iron phosphate batteries, and the first stripping solution containing Ni/Co/Mn elements, which is obtained by Step 4, is used as a raw material for preparing ternary positive-electrode active materials.

Optionally, the Step 1 includes removing binder, so as to separate positive-electrode active materials from current collectors.

Optionally, in the Step 1, oxygen-free pyrolysis is used to remove binder, so as to separate positive-electrode active materials from current collectors.

Optionally, the Step 1 includes physical sorting, by which metal sheets of current collectors are sorted out, and the left is the mixture of powders which contains positive-electrode materials.

Optionally, the Step 1 does not separate positive electrode material from negative electrode material, so the mixture of powders obtained in Step 1 contains both the positive electrode materials and carbon.

The present invention brings at least one of the following advantages.
1. Based on the two most popular cathode materials of lithium batteries (lithium iron phosphate and ternary materials), the present invention designs and optimizes a wet method for recycling the metals from cathode materials.
2. The process of the present invention involves both the recycling of ternary electrodes and also the recycling of lithium iron phosphate electrodes. Therefore, in the stage of pretreatment, it is not necessary to manually pre-separate ternary batteries from lithium iron phosphate batteries. Instead, we separate and recycle two different types of cathode active materials in the stage of wet method.
3. The products of this recycling have high values in use and can be directly used in reproducing cathode materials of lithium batteries.
4. By an extraction method, different metal ions can be selected out, which can efficiently separate different metals in the leachate.

### Detailed Description

In the present invention, "lithium battery" is a synonym for "lithium ion battery".

The present invention takes several lithium batteries on the market as examples. According to the materials of cathodes, lithium batteries on the market can be classified into ternary lithium batteries, lithium iron phosphate batteries, etc. According to the materials of battery casings, lithium batteries can be classified into soft-pack lithium batteries, aluminum-cased lithium batteries and steel-cased lithium batteries. For a soft-pack lithium battery,an aluminum-plastic film is usually used as a soft casing for packaging the battery cell. For an aluminum-cased lithium battery, aluminum or aluminum alloy is used as an aluminium hard casing for packaging the battery cell. For a steel-cased lithium battery, stainless steel is used as a hard casing for packaging the battery cell.

In an example, the to-be-recycled lithium battery mainly comprises the following components: positive current collector, negative current collector, binder, positive-electrode active material, negative-electrode active material, porous separator, electrolyte liquid, and casing.

For example, positive current collector may be aluminum foil, and negative current collector may be copper foil. The positive-electrode active material of ternary lithium battery may be NCM (three metal elements are nickel, cobalt and manganese) and NCA (three metal elements are nickel, cobalt and aluminum). Setting the three metal elements in different proportions can achieve different performances of battery. For example, in the embodiment of the present invention, LiNiₓCo_{y}Mn_{z}O₂ and LiCoO₂ are used as positive-electrode active materials. The positive-electrode active material of lithium iron phosphate battery may be lithium iron phosphate (LiFePOt).

Particles of the positive-electrode active material are mixed with the binder and then evenly coated on the positive current collector (aluminum foil), so as to form the positive electrode of the battery. Sometimes a conductive agent can be added, that is to say, the positive-electrode active material, the conductive agent and the binder are mixed, and then evenly coated on the positive current collector (aluminum foil).

The negative-electrode active material is normally graphite or graphene. For example, the negative-electrode active material is mixed with a binder (optionally, a conductive agent may be added), and then evenly coated on the negative current collector (copper foil), so as to form the negative electrode of the battery.

Normally, the binder may be polyvinylidene fluoride (PVDF), cellulose binder such as sodium carboxymethylcellulose (CMC), polyacrylic acid binder (PAA), styrene-butadiene rubber (SBR), or conductive binder, etc.

The conductive agent for lithium batteries may be traditional conductive agents (such as carbon black, conductive graphite, carbon fiber, etc.), or new-type conductive agents (such as carbon nanotubes, graphene, mixed conductive slurries, etc.). The commercial conductive agent on the market may be acetylene black (AB), Ketjen black (KB), vapor grown carbon fiber (VGCF), carbon nanotubes (CNT), etc.

The electrolyte contains lithium salt and organic solvent. The commonly-used lithium salt in lithium batteries is LiPF₆. The organic solvent is generally a carbonate organic compound, such as ethylene carbonate, propylene carbonate, diethyl carbonate, dimethyl carbonate, etc.

The porous separator is normally a polyolefin separator. For example, polyethylene (PE) or polypropylene (PP). The separator may have a structure of a single layer or a structure of three layers. For example, single-layer PE, single-layer PP, PP/PE/PP composite separator, etc.

The recycling of lithium batteries aims to use physical and/or chemical means to separate and/or convert the above components in the mixture. Firstly, some elements (especially some high-value metal elements) can be purified and reused; secondly, the discharged pollutants can be reduced.

The present invention provides a method of using a wet method to recycle metal elements in lithium batteries. The method includes the following steps:
Step 1, pretreating lithium batteries, so as to obtain a mixture of powders containing positive-electrode materials;
Step 2, acid leaching to obtain leachate;
Step 3, if the to-be-recycled lithium battery contain a lithium iron phosphate battery, the solid products, obtained after acid leaching and solid-liquid filtration, are heated in an oxygen-containing atmosphere, so as to burn up carbon, then the left is ferric phosphate;
Step 4, if the to-be-recycled lithium battery contains a ternary lithium battery, the leachate, obtained after acid leaching and solid-liquid filtration, is sent to an extraction step, wherein P204 (diisooctyl phosphate) is used as extraction agent, so as to obtain a raffinate containing Li element and an organic phase containing Ni/Co/Mn elements.

For example, step 1 may include battery discharging. Battery discharging is normally the first step in battery recycling. Completely discharging the battery pack can prevent the discarded batteries from concentrated heat release or short circuit during subsequent processing, and thus avoid fire and explosion incidents. For example, discharging can be conducted by chemical methods, that is, using the positive metal and negative metal of the battery as cathode and anode, and using an electrolysis process in a solution to consume the remaining power in the battery. For example, sodium chloride solution can be used as the electrolyte to discharge the lithium batteries.

For example, step 1 may also include disassembling. From a battery pack, a battery module or a battery system, single battery cells can be obtained by disassembling. In addition, through disassembling, single battery cells can be separated from structural parts, wires, and/or connectors (such as battery terminals).

For example, step 1 may also include crushing. Crushing is to fragment the battery through a crusher to obtain crushed products. Preferably, the size of the longest side of the crushed product is ≤ 6 cm, more preferably ≤ 4 cm. If it is a steel-cased lithium battery, a hammer crusher may be used for crushing. If it is a soft-packed lithium battery, a tearing machine can be firstly used to tear the casing, and then a crusher is used for crushing.

For example, for steel-cased lithium batteries, the step 1 may include a magnetic separation after crushing. Through magnetism, ferromagnetic substances such as stainless steel can be separated easily. This enables the separation and recycling of ferromagnetic materials such as stainless steel.

For example, step 1 may also include winnowing. For example, crushed products are thrown into an upward airflow. Under the action of an upward suction force generated by a ventilation fan, the lightest part of the products floating on the top is first sucked away through a side pipe. This enables the separation and recycling of (porous) separators. Besides, removing the separators can also reduce the waste gases generated by the pyrolysis of organic matter in subsequent pyrolysis process.

In Step 1 of the present invention, organic components are removed. For example, the binder is removed, so as to separate positive-electrode active materials from current collectors. Preferably, pyrolysis (e.g. oxygen-free pyrolysis) is used to remove the binder, so as to separate positive-electrode active materials from current collectors.

Preferably, the Step 1 of the present invention includes removing F and organic components in the lithium battery. For example, F and organic components in lithium batteries can be removed through oxygen-free pyrolysis.

In an embodiment, the present invention does not intentionally remove the electrolyte from the lithium batteries. Instead, the electrolyte is directly sent to the oxygen-free pyrolysis.
"oxygen-free" means to under the condition of vacuum or under the protection of protective gas (nitrogen or argon). Thereby the reactants will not have a chemical reaction with oxygen. Considering that the gas products after pyrolysis are preferred to be burned (combusted) in our invention, the pyrolysis is preferably performed under vacuum. It can avoid too many inert protective gases in the gas products which may reduce the efficiency of combustion. In an example, after feeding, the furnace is evacuated, until the vacuum degree in the furnace is less than 1000 Pa, more preferably less than 500 Pa, and then heating is started. In another example, replacement by nitrogen is combined with vacuuming, so as to eliminate oxygen from the furnace, until the vacuum degree in the furnace is less than 2000 Pa, more preferably less than 1000 Pa, and then heating is started.

The temperature of the oxygen-free pyrolysis in the present invention is 400-600°C, preferably 400-500°C, more preferably 430-480°C, such as 450°C. In this pyrolysis process, organic matter such as the binder is thermally decomposed, so that the positive/negative-electrode active materials can be easily separated from the positive/negative current collectors. Under this condition, lithium hexafluorophosphate in the electrolyte will also be fully pyrolyzed, and its pyrolysis products include phosphorus pentafluoride (PF₅) and hydrogen fluoride (HF).

Preferably, the reaction time of the oxygen-free pyrolysis lasts for no less than 30 minutes.

In the present invention, a gas-solid filtration device may be used to perform a gas-solid separation for the pyrolysis product. When lithium hexafluorophosphate is used in electrolyte in the present invention, phosphorus pentafluoride (PF₅) and hydrogen fluoride (HF) are generated after pyrolysis. Therein, hydrogen fluoride (HF) is highly corrosive, and phosphorus pentafluoride (PF₅) will enhance the corrosiveness of hydrogen fluoride ( HF). Thus, the gas-solid filtration device of the present invention needs to use a filter material that are not easily corroded by HF and PF₅.

The filter material, which can be used in the present invention and is not easily corroded by HF and PF₅, is preferably a metal material that is resistant to corrosion by HF and PF₅.

The "metal" material mentioned in the present invention may be a pure metal or an alloy material.

Metal materials resistant to HF and PF₅ corrosion that can be used in the present invention may be nickel, nickel alloy, or molybdenum alloy. In addition, for chromium or titanium metal, hydrogen fluoride without water will form a passivation film on the surface of chromium or titanium. Thus, chromium, titanium, or alloys containing chromium/titanium are also applicable. In addition, some precious metals, like platinum, gold, or silver, will not be corroded by HF, and thus are also applicable, however they are too expensive and thus not preferred.

In the present invention, the preferred material is nickel, or a nickel alloy with a nickel content of 50% or above. The nickel alloy with a nickel content of 50% or above is for example Hastelloy alloy, Monel alloy, or NS3301 alloy.

Hastelloy is a nickel-based corrosion-resistant alloy, which is mainly divided into two categories: nickel-chromium alloy and nickel-chromium-molybdenum alloy. Hastelloy (Hastelloy alloy) is the general name of the commercial brands of nickel-based corrosion-resistant alloys produced by Hastelloy International Corporation in the United States. For example, Hastelloy C276 or Hastelloy B-2 has very good resistance to HF corrosion.

Monel alloy is an alloy wherein nickel is taken as a base, and copper, iron, and/or manganese are added, such as Monel 400 alloy (Ni68Cu28Fe).

NS3301 alloy is nickel-chromium-molybdenum alloy with a low molybdenum content. It can withstand high-temperature HF gas and is easy to be processed and shaped. The chemical composition of NS3301 alloy is the following: C ≤ 0.03 wt%, Cr 14-17 wt%, Fe ≤ 8.0 wt%, Mo 2-3 wt%, Ti 0.4-0.9 wt%, P ≤ 0.03 wt%, S ≤ 0.02 wt%, Si ≤ 0.7 wt%, Mn ≤ 1.0 wt%, the balance is Ni and inevitable impurities.

Among the above-mentioned three types of alloys, NS3301 alloy is the easiest to be drawn into wires, Monel alloy is followed, and Hastelloy is relatively difficult to be drawn into wires.

In an example, the filter material in the present invention is metal wire mesh. For example, the above-mentioned corrosion-resistant metal material is drawn into wires and then woven into a mesh. For example, pure nickel metal or NS3301 alloy or Monel alloy is drawn into wires, and then woven into a mesh. The diameter of the wire after drawing is preferably less than 0.5 mm, more preferably less than 0.3 mm, more preferably less than 0.2 mm; the size (the length of the longest side) of the mesh hole is preferably less than 0.5 mm, more preferably less than 0.3 mm. The metal wire mesh can be plain weave, or be pressed into corrugations. Besides, the filtration effect can be increased by laminating multiple layers of metal meshes. When laminating multiple layers, multiple layers of wire meshes can be cross-overlapped at a certain angle, or the patterns of different layers can be staggered by a certain distance.

In another example, the filter material of the present invention is a sintered porous metal material. For example, porous metal material is obtained by sintering nickel powders or nickel alloy powders. As an example, nickel powders with an average particle size of no more than 100 microns are molded into a sheet, and then vacuum sintering is used, the vacuum degree is less than 1 Pa, the sintering temperature is 1000-1300 °C (such as 1200 °C), and the sintering time is more than 1 hour, thus the porous nickel material can be obtained. By using the powder sintering method, it can easily adjust the pore size of the porous metal material. For example, the average particle size of the powders, the size distribution of the powders, the particle shape of the powders, and the sintering temperature may affect the pore size of the sintered metal. Therefore, compared with the wire mesh, the method of sintering powders has the advantage that it is easier to prepare a filter material with smaller pore sizes (effective pore size).

In another example, the filter material of the present invention is a sintered porous metal on a porous substrate. The porous substrate may be metal foam or metal wire mesh. Metal foam / metal wire mesh has the advantages of good strength and is not easily broken. However, the pore size of metal foam / metal wire mesh is relatively large. By applying sintered porous metal material on it, the efficient pore size of the filter material can be reduced and the filtration effect can be improved. A metal foam used in the present invention may be for example nickel foam. A metal wire mesh used in the present invention may be for example drawing pure nickel or NS3301 alloy or Monel alloy into wires and then weaving into a mesh, but the present invention is not limited thereto. As an example, the metal wire mesh is a plain weave mesh obtained by drawing NS3301 alloy into wires. For example, the diameter of the wire after drawing is preferably less than 0.5 mm, and the size (the length of the longest side) of the mesh hole is preferably less than 0.5 mm. Then a slurry containing nickel powders is coated on the mesh, and then sintered. For example, nickel powders with a nearly spherical shape and with a particle size of less than 10 microns, ethanol as a dispersant, and polyvinyl butyral (PVB) as the binder are mixed into a slurry. For example, the mass ratio of nickel powders: ethanol: PVB is 50-85: 100: 2-5. For example, the sintering temperature is 1000-1200 °C (such as 1100 °C). The sintering time is no less than 1h. Thereby, the sintered porous nickel material on the NS3301 alloy wire mesh is obtained. Since the slurry has a certain fluidity, it will move into the pores of the porous substrate, thereby forming an integrated filter material after sintering.

Preferably, in the present invention, the metal material that is not easily corroded by HF and PF₅, is also used for the inner wall of the pyrolysis furnace and the air channels connected thereof. For example, the above-mentioned nickel, chromium, titanium or corresponding alloy. For example,the above-mentioned platinum, gold, or silver is expensive, but applicable. For example, the above-mentioned Hastelloy alloy, Monel alloy, or NS3301 alloy.

In the present invention, the gas products obtained after gas-solid separation may contain one or more components from the following: H₂, CH₄, CO, HF, PF₅, CO₂.

As mentioned above, when lithium hexafluorophosphate is used in electrolyte in the present invention, it generates phosphorus pentafluoride (PF₅) and hydrogen fluoride (HF) after pyrolysis.

During the pyrolysis process, the binder (such as polyvinylidene fluoride (PVDF)) pyrolyzes, so the positive/negative-electrode active material peels off from the current collector. The pyrolysis products of PVDF mainly include fluorides, such as hydrofluoric acid, fluorocarbons, etc., and also include a small amount of alkanes and hydrocarbons.

During the pyrolysis process, the organic solvent (such as ethylene carbonate, propylene carbonate, diethyl carbonate) in the electrolyte volatilizes in the form of steam, or decomposes into carbon monoxide, carbon dioxide, etc.

In addition, the mixture entering the pyrolysis may contain residual separators (polyethylene (PE) or polypropylene (PP)). After pyrolysis, the carbon chains are broken into hydrogen, methane, hydrocarbons, aldehydes, carbon monoxide, etc.

In the present invention, the gas products obtained after gas-solid separation may be sent to a combustion furnace.

In the present invention, it is preferred that the high-temperature pyrolyzed gas is directly sent to the combustion furnace after the gas-solid separation, without an additional cooling step. That is to say, the high-temperature gas passes through the gas-solid filtration device in a high temperature of above 200°C, preferably above 300°C, and is then sent to the combustion furnace in a high temperature of above 200°C, preferably above 300°C. This can make full use of the heat of the flue gas to promote combustion and thus can save energy.

Preferably, oxygen-enriched combustion technology is used. Preferably, oxygen-enriched air with an oxygen content of 25% or above, or even 35% or above, or pure oxygen is used as a combustion-supporting gas. The excess oxygen coefficient is 100% or above, or even 120% or above. In an example of the present invention, the high-temperature gas products with a temperature of above 200°C are injected into the combustion furnace in batches, which will spontaneously combust under the oxygen-enriched condition.

In a preferred embodiment, a flue gas heat exchanger is used to reuse the heat from the flue gas after combustion.

In the present invention, the combustion products of the gas components are acidic substances (carbonic acid, phosphoric acid, hydrofluoric acid, etc.), therefore, the acid radicals therein can be absorbed by an alkaline solution (such as limewater). The produced salts, such as calcium salts, can be used in industry. For example, the produced salts may be calcium fluoride, calcium phosphate, etc.

In an example, the flue gas after combustion in the present invention can be deacidified by alkaline solution. For example, a flue gas purification device may be used. For example, an injecting device is used to inject alkaline solution into the flue gas in a purification furnace, so as to perform a deacidification reaction. The alkaline solution may be limewater, such as a saturated aqueous solution of calcium hydroxide. Thereby, phosphorus-containing acidic gas in flue gas may be converted into calcium phosphate, fluorine-containing acidic gas in flue gas may be converted into calcium fluoride, etc.

In an example of the present invention, the gas after deacidification by the alkaline solution can be further treated by a simple post-processing (such as using a dust collector to remove dust or using activated carbon to absorb pollutants), and then meet the emission standards, and then can be directly discharged. For example, by using various dust collectors in the existing technology, dust particles in the flue gas can be separated and removed, so as to meet the emission standards required by environmental protection. For example, an activated-carbon adsorption tower may be used to purify the exhaust gas and to remove particulate pollutants from flue gas, so as to meet the emission standards required by environmental protection.

In another example, a dust removal device, such as a cyclone dust removal tower and/or a bag dust removal tower, may be provided before the deacidification by alkaline solution, so as to pre-remove some dust particles.

In another alternative example, the gas products, obtained after pyrolysis and gas-solid separation, first pass through the alkaline solution (to remove HF, PF₅), and then are sent to the combustion furnace for combustion (to remove H₂, CH₄, and CO). Thus, the main products after combustion are water and carbon dioxide. Therefore, if the dust particles after combustion meet the standards, the exhaust gas can be discharged directly; if there are too many dust particles after combustion, dust removal can be perform until the standards are met, then the exhaust gas can be discharged.

After pyrolysis and gas-solid separation, solid products are taken out from the pyrolysis furnace, so as to recycle metal elements; the metal elements include but are not limited to one or more selected from the following: lithium, aluminum, copper, iron, nickel, cobalt, manganese.

In the present invention, the solid products after the pyrolysis mainly include current collectors (such as aluminum foil, copper foil), carbon (from negative-electrode active materials, and from the pyrolysis of some organic matter), positive-electrode materials (such as lithium iron phosphate or ternary materials).

Preferably, the step 1 of the present invention further includes physical sorting. By physical sorting, metal sheets of current collectors can be sorted out, and then a mixture of powders is left. By physical screening, such as vibrating screening, metal sheets can be separated from powders.

Preferably, two or more stages of vibrating screenings may be used. In the first screening, the large particles (large metal sheets) are screened out, then in the second screening, the medium particles (medium metal sheets) are screened out, and finally the powders (powder mixture) are left. In an example, a screen having a mesh size of 10-40 mesh is used for the first screening, and a screen having a mesh size of 100-200 mesh is used for the second screening.

The metal sheets obtained after physical screening are normally copper foil and/or aluminum foil. Since the aluminum foil is lighter and the copper foil is heavier, the copper foil and aluminum foil can be further separated by a shaker.

In the present invention, the powder mixture obtained after physical screening contains the positive-electrode material(s), as well as carbon from the negative-electrode active material(s).

The present invention recycles metal elements from the powders (powder mixture), by a wet method.

The present invention provides a method of using a wet method to recycle metal elements in lithium batteries, including the following steps:
Step 2, acid leaching to obtain leachate;
Step 3, if the to-be-recycled lithium battery contain a lithium iron phosphate battery, the solid products, obtained after acid leaching and solid-liquid filtration, are heated in an oxygen-containing atmosphere, so as to burn up carbon, then the left is ferric phosphate;
Step 4, if the to-be-recycled lithium battery contains a ternary lithium battery, the leachate, obtained after acid leaching and solid-liquid filtration, is sent to an extraction step, wherein P204 (diisooctyl phosphate) is used as extraction agent, so as to obtain a raffinate containing Li element and an organic phase containing Ni/Co/Mn elements.

The acid leaching in the present invention is preferred to use the following process: using inorganic acid and oxidizing agent to leach metal elements. The inorganic acid is preferably sulfuric acid, hydrochloric acid, or the like. The oxidizing agent is preferably hydrogen peroxide. For example, obtaining a mixed aqueous solution containing 0.5-5 mol/L (preferably 1-2 mol/L) sulfuric acid and 0.5-5 mol/L (preferably 1-2 mol/L) hydrogen peroxide, and adding it to the powders. The mass ratio (powders: mixed aqueous solution) is 1:2-20, preferably 1:5-10. Preferably, during the leaching process, heating (such as heating to 50°C-100°C, preferably 50°C-80°C, such as 60°C) and stirring (such as at a stirring speed of 50-250 r/min, such as 120 r/min), is conductive to a rapid and complete leaching of lithium element. Normally, the leaching process lasts for 30 minutes or more, preferably 1 hour or more.

The present invention do not have to separate the ternary lithium batteries from the lithium iron phosphate batteries in the pretreatment, but rather, the electrode active materials of the two types of batteries are mixed and sent to acid leaching together, which can save more raw materials like H₂O₂.

During acid leaching, the lithium element is leached into the leachate.

If the to-be-recycled lithium battery contain a lithium iron phosphate battery, iron element and phosphorus element remain in the solid phase when lithium element is leached by acid. The solid products (filter residue), obtained after acid leaching and solid-liquid filtration, mainly comprise ferric phosphate (FePO4) and carbon powders, and then are heated in an oxygen-containing atmosphere, so as to burn up carbon. Thereafter, the left is ferric phosphate. For example, heating in an air or oxygen atmosphere to 600-700 °C for 2-4 hours.

The ferric phosphate obtained by the present invention can be used as a raw material for preparing positive-electrode active material for lithium iron phosphate batteries.

If the to-be-recycled lithium battery contains a Ni/Co/Mn ternary lithium battery, the Ni/Co/Mn elements will also be leached by the acid leaching.

For the filtrate (leachate) obtained after acid leaching and solid-liquid filtration, the present invention uses an extraction agent to separate Li element from ternary metal elements (Ni/Co/Mn). The present invention preferably uses P204 (diisooctyl phosphate) as the extraction agent, to obtain a raffinate containing Li element and an organic phase containing Ni/Co/Mn elements.

Afterwards, back-extraction is performed on the organic phase containing Ni/Co/Mn, wherein sulfuric acid aqueous solution (for example 15-20 wt% sulfuric acid, such as 18 wt% sulfuric acid) is used as the back-extraction agent, so as to obtain a first stripping solution containing nickel, cobalt and manganese elements.

Besides, lithium element can be gathered from lithium-containing raffinate. For example, by adding a precipitating agent, precipitation of lithium salt can be obtained.

For example, if sodium carbonate is used as the precipitating agent, a precipitation of lithium carbonate can be obtained. Because the solubility of sodium carbonate increases as the temperature increases, and the solubility of lithium carbonate decreases as the temperature increases, choosing a temperature close to boiling (e.g. above 90°C (e.g. 95°C)) to precipitate lithium can achieve better effects.

For example, a 200-500 g/L (such as 300 g/L) sodium carbonate aqueous solution is heated to above 90°C (such as 95°C), and then lithium solution is added. Holding the temperature for more than 30 minutes.

In an example, the lithium concentration in the lithium solution is first measured, and then the amount of excess sodium carbonate is adjusted to be 10% or more.

In another example, after precipitating at a constant temperature of above 90°C for a while, a sample is taken out to analyze the carbonate concentration in the mother solution, and the carbonate concentration is controlled to be 13-18 g/L. If the carbonate concentration is too high, adding lithium solution; and if it is too low, adding sodium carbonate aqueous solution.

If the to-be-recycled lithium batteries do not contain ternary lithium batteries, but only lithium iron phosphate batteries, the lithium element is leached into the leachate during the acid leaching in the present invention, while the iron and phosphorus remain in the solid phase. In this situation, the leachate is rich in soluble lithium salts (e.g. lithium sulfate or lithium chloride), so it can be directly used to gather lithium elements. For example, by adding a precipitating agent, precipitation of lithium salt can be obtained. For example, if sodium carbonate is used as the precipitating agent, a precipitation of lithium carbonate can be obtained.

The lithium carbonate obtained by the present invention has a wide use in industry, for example as a raw material for producing lithium batteries.

The Ni/Co/Mn elements in the first stripping solution do not need to be further separated, because the first stripping solution can be directly used as a raw material for preparing ternary positive-electrode active materials.

In another example, the Ni/Co/Mn elements may be further separated and purified by an extraction method. Preferably, the first stripping solution (containing nickel, cobalt and manganese elements) is send to extraction, wherein the extraction agent is a mixture of P204 and sulfonated kerosene (preferably the content of sulfonated kerosene is 60-80% (v/v), such as 30% P204 + 70% sulfonated kerosene), saponified by alkali ( preferably pH value is 7-8 after the saponification). Thereby, an organic phase containing manganese element and a second raffinate (containing nickel and cobalt elements) are obtained.

Since kerosene is obtained by primary fractionation of petroleum, it contains a large amount of unsaturated hydrocarbons, sulfur and impurities. People add excess concentrated sulfuric acid (sulfonation reaction with unsaturated alkanes in kerosene), then use water to remove excess sulfuric acid, neutralize the residual acid with saturated sodium bicarbonate, and finally use anhydrous sodium sulfate to remove water. Thereby, sulfonated kerosene can be obtained. Sulfonated kerosene has a high content of stable saturated alkanes and has relatively few impurities, which can improve the extraction rate.

Optionally, back-extraction is performed on the organic phase containing manganese element, wherein sulfuric acid aqueous solution (for example 15-20 wt% sulfuric acid, such as 18 wt% sulfuric acid) is used as the back-extraction agent, so as to obtain an aqueous solution containing manganese sulfate. Preferably, the pH value of the aqueous phase at the outlet of back-extraction is so controlled to be 4-4.5.

Optionally, extraction is further performed on the second raffinate (containing nickel and cobalt elements), wherein the extraction agent is P507 (2-ethylhexylphosphoric acid) saponified by acid. Preferably, the saponification ratio of the extraction agent is 60%-70%. Preferably, the pH value of the extraction agent is 3-3.5 during extraction. Thereby, an organic phase containing cobalt element and a third raffinate (containing nickel element) are obtained.

Optionally, back-extraction is performed on the organic phase containing cobalt element, wherein hydrochloric acid (preferably 4-5 mol/L) is used as the back-extraction agent, so as to obtain an aqueous solution containing cobalt chloride. Preferably, the pH value of the aqueous phase at the outlet of back-extraction is so controlled to be 4-4.5.

Thereby, lithium, nickel, cobalt, and manganese can be separated from each other.

In order to better understand the present invention, the following detailed examples are provided. These embodiments are only used to illustrate the present invention, and should not be construed as limitations of the present invention.

### Example 1

Using pyrolysis + wet method to recycle lithium iron phosphate batteries

In this example, the lithium iron phosphate battery mainly comprises the following: the positive-electrode active material (lithium iron phosphate), conductive agent (acetylene black) and binder (polyvinylidene fluoride (PVDF)) are mixed, and then coated on the current collector Al foil, so as to form the positive electrode; the negative-electrode active material (graphite), conductive agent (acetylene black) and binder (styrene-butadiene rubber (SBR)) are mixed, and then coated on the Cu foil, so as to form the negative electrode; the electrolyte comprises lithium salt (LiPF₆) and organic solvent (dimethyl carbonate). The porous separator is a polyethylene (PE) separator.

In this example, the recycling method includes the following steps.
1. Discharging the batteries.
2. Using a crusher to crush the materials, so that the size of the longest side of a crushed product is ≤ 4 cm.
3. Magnetic separation to obtain ferromagnetic materials (stainless steel casings).
4. Winnowing to remove (recycle) separator materials.
5. Pyrolysis under vacuum, wherein before heating the vacuum degree in the furnace is less than 500 Pa, during pyrolysis the temperature in the pyrolysis furnace is controlled at 450±20 °C, and the pyrolysis time is 1 hour.
6. Opening the valve of the gas outlet of the pyrolysis furnace, and pumping the gas products of pyrolysis into the gas outlet. The gas products pass through the gas-solid filtration device, and then are sent to the combustion furnace, burning under oxygen-enriched atmosphere (the combustion-supporting gas has an oxygen content of 25 % or above), the excess oxygen coefficient is 100%.
7. The flue gas after combustion passes through a flue gas heat exchanger to reuse the heat.
8. The flue gas is deacidified through the saturated limewater, and passes through an activated-carbon absorption tower, and then is discharged if meeting the standards.
9. Taking out the solid products after pyrolysis, and using two stages of vibrating screenings to obtain the metal sheets of current collectors (copper foil and/or aluminum foil), and the left is the powder mixture (powders).
10. The powders are subjected to acid leaching, to obtain leachate. For the acid leaching, a mixed aqueous solution containing 1.2 mol/L H₂SO₄ and 1.3 mol/L H₂O₂ is used. The mass ratio (powder: mixed aqueous solution) is 1:8. The leaching temperature is 60°C, the leaching time is 1 h, and the stirring speed is 120 r/min.
11. The solid products, obtained after acid leaching and solid-liquid filtration, are heated in an oxygen-containing atmosphere to 600°C for 2 hours, so as to burn up carbon. Ferric phosphate is obtained.
12. The leachate, obtained after acid leaching and solid-liquid filtration, is taken as lithium solution for recycling Li element, wherein 300 g/L sodium carbonate aqueous solution (the excess of sodium carbonate is in amount of 10%) is heated to 95°C, and then lithium solution is added, and then it is held at the temperature for more than 30 minutes. Precipitation of lithium carbonate is obtained.

### Example 2

In this example,the ternary lithium battery uses LiNiₓCo_{y}Mn_{z}O₂ and LiCoO₂ as the positive-electrode active material, and the others are similar to the lithium iron phosphate battery in the Example 1.

In this example, the recycling method includes the following steps.
1. Discharging the batteries.
2. Using a crusher to crush the materials, so that the size of the longest side of a crushed product is ≤ 4 cm.
3. Magnetic separation to obtain ferromagnetic materials (stainless steel casings).
4. Winnowing to remove (recycle) separator materials.
5. Pyrolysis under vacuum, wherein before heating the vacuum degree in the furnace is less than 500 Pa, during pyrolysis the temperature in the pyrolysis furnace is controlled at 450±20 °C, and the pyrolysis time is 1 hour.
6. Opening the valve of the gas outlet of the pyrolysis furnace, and pumping the gas products of pyrolysis into the gas outlet. The gas products pass through the gas-solid filtration device, and then are sent to the combustion furnace, burning under oxygen-enriched atmosphere (the combustion-supporting gas has an oxygen content of 25 % or above), the excess oxygen coefficient is 100%.
7. The flue gas after combustion passes through a flue gas heat exchanger to reuse the heat.
8. The flue gas is deacidified through the saturated limewater, and passes through an activated-carbon absorption tower, and then is discharged if meeting the standards.
9. Taking out the solid products after pyrolysis, and using two stages of vibrating screenings to obtain the metal sheets of current collectors (copper foil and/or aluminum foil), and the left is the powder mixture (powders).
10. The powders are subjected to acid leaching, to obtain leachate. For the acid leaching, a mixed aqueous solution containing 1.2 mol/L H₂SO₄ and 1.3 mol/L H₂O₂ is used. The mass ratio (powder: mixed aqueous solution) is 1:8. The leaching temperature is 60°C, the leaching time is 1 h, and the stirring speed is 120 r/min.
11. The leachate, obtained after acid leaching, is sent to an extraction step, wherein P204 (diisooctyl phosphate) is used as extraction agent, so as to obtain a raffinate containing Li element and an organic phase containing Ni/Co/Mn elements.
12. Back-extraction is performed on the organic phase containing Ni/Co/Mn, wherein sulfuric acid aqueous solution (18 wt% sulfuric acid) is used as the back-extraction agent, so as to obtain a first stripping solution containing nickel, cobalt and manganese elements.
13. Sodium carbonate is used as the precipitating agent, to obtain a precipitation of lithium carbonate from the raffinate containing Li element, wherein 300 g/L sodium carbonate aqueous solution (the excess of sodium carbonate is in amount of 10%) is heated to 95°C, and then lithium solution is added, and then it is held at the temperature for more than 30 minutes.

### Example 3

Using pyrolysis + wet method to recycle mixed lithium batteries

The mixed lithium batteries are formed by two types of lithium batteries, which include both the ternary lithium battery (LiNiₓCo_{y}Mn_{z}O₂ and LiCoO₂) in Example 2 and the lithium iron phosphate battery in Example 1. All the battery casings thereof are made of stainless steel.

In this example, the recycling method includes the following steps.
1. Discharging the batteries.
2. Using a crusher to crush the materials, so that the size of the longest side of a crushed product is ≤ 4 cm.
3. Magnetic separation to obtain ferromagnetic materials (stainless steel casings).
4. Winnowing to remove (recycle) separator materials.
5. Pyrolysis under vacuum, wherein before heating the vacuum degree in the furnace is less than 500 Pa, during pyrolysis the temperature in the pyrolysis furnace is controlled at 450±20 °C, and the pyrolysis time is 1 hour.
6. Opening the valve of the gas outlet of the pyrolysis furnace, and pumping the gas products of pyrolysis into the gas outlet. The gas products pass through the gas-solid filtration device, and then are sent to the combustion furnace, burning under oxygen-enriched atmosphere (the combustion-supporting gas has an oxygen content of 25 % or above), the excess oxygen coefficient is 100%.
7. The flue gas after combustion passes through a flue gas heat exchanger to reuse the heat.
8. The flue gas is deacidified through the saturated limewater, and passes through an activated-carbon absorption tower, and then is discharged if meeting the standards.
9. Taking out the solid products after pyrolysis, and using two stages of vibrating screenings to obtain the metal sheets of current collectors (copper foil and/or aluminum foil), and the left is the powder mixture (powders).
10. The powders are subjected to acid leaching, to obtain leachate. For the acid leaching, a mixed aqueous solution containing 1.2 mol/L H₂SO₄ and 1.3 mol/L H₂O₂ is used. The mass ratio (powder: mixed aqueous solution) is 1:8. The leaching temperature is 60°C, the leaching time is 1 h, and the stirring speed is 120 r/min.
11. The solid products, obtained after acid leaching and solid-liquid filtration, are heated in an oxygen-containing atmosphere to 600°C for 2 hours, so as to burn up carbon. Ferric phosphate is obtained.
12. The leachate, obtained after acid leaching, is sent to an extraction step, wherein P204 (diisooctyl phosphate) is used as extraction agent, so as to obtain a raffinate containing Li element and an organic phase containing Ni/Co/Mn elements.
13. Back-extraction is performed on the organic phase containing Ni/Co/Mn, wherein sulfuric acid aqueous solution (18 wt% sulfuric acid) is used as the back-extraction agent, so as to obtain a first stripping solution containing nickel, cobalt and manganese elements.
14. Sodium carbonate is used as the precipitating agent, to obtain a precipitation of lithium carbonate from the raffinate containing Li element, wherein 300 g/L sodium carbonate aqueous solution (the excess of sodium carbonate is in amount of 10%) is heated to 95°C, and then lithium solution is added, and then it is held at the temperature for more than 30 minutes.

### Example 4

Using an extraction method to further separate Ni/Co/Mn elements in the first stripping solution of Example 2 or 3.

It includes the following steps.
1. The first stripping solution (containing nickel, cobalt and manganese elements) is send to extraction, wherein the extraction agent is a mixture of P204 and sulfonated kerosene (30% P204 + 70% sulfonated kerosene (v/v)), saponified by alkali (pH value is 7-8 after the saponification). Thereby, an organic phase containing manganese element and a second raffinate (containing nickel and cobalt elements) are obtained.
2. Back-extraction is performed on the organic phase containing manganese element, wherein 18 wt% sulfuric acid aqueous solution is used as the back-extraction agent, so as to obtain an aqueous solution containing manganese sulfate. The pH value of the aqueous phase at the outlet of back-extraction is so controlled to be 4-4.5.
3. Extraction is further performed on the second raffinate (containing nickel and cobalt elements), wherein the extraction agent is P507 (2-ethylhexylphosphoric acid) saponified by acid. The saponification ratio of the extraction agent is 65%. The pH value of the extraction agent is 3-3.5 during extraction. Thereby, an organic phase containing cobalt element and a third raffinate (containing nickel element) are obtained.
4. Back-extraction is performed on the organic phase containing cobalt element, wherein 4 mol/L hydrochloric acid is used as the back-extraction agent, so as to obtain an aqueous solution containing cobalt chloride. The pH value of the aqueous phase at the outlet of back-extraction is so controlled to be 4-4.5.

## Claims

1. A method of using a wet method to recycle metal elements in lithium batteries, including the following steps:
Step 1, pretreating lithium batteries, so as to obtain a mixture of powders containing positive-electrode materials;
Step 2, acid leaching to obtain leachate;
Step 3, if the to-be-recycled lithium battery contain a lithium iron phosphate battery,
the solid products, obtained after acid leaching and solid-liquid filtration, are heated in an oxygen-containing atmosphere, so as to burn up carbon, then the left is ferric phosphate;
Step 4, if the to-be-recycled lithium battery contains a ternary lithium battery, the leachate, obtained after acid leaching and solid-liquid filtration, is sent to an extraction step, wherein diisooctyl phosphate is used as extraction agent, so as to obtain a raffinate containing Li element and an organic phase containing Ni/Co/Mn elements.

2. The method of claim 1, wherein the Step 4 further includes that the back-extraction is performed on the organic phase containing Ni/Co/Mn elements, wherein sulfuric acid aqueous solution is used as the back-extraction agent, so as to obtain a first stripping solution containing Ni/Co/Mn elements.

3. The method of claim 2, wherein the Step 4 further includes that by adding a precipitating agent of sodium carbonate into the raffinate containing Li element, precipitation of lithium carbonate is obtained.

4. The method of any preceding claim, wherein the ferric phosphate obtained by Step 3 is used as a raw material for preparing positive-electrode active material for lithium iron phosphate batteries, and the first stripping solution containing Ni/Co/Mn elements, which is obtained by Step 4, is used as a raw material for preparing ternary positive-electrode active materials.

5. The method of any preceding claim, wherein the Step 1 includes removing binder, so as to separate positive-electrode active materials from current collectors.

6. The method of claim 5, wherein in the Step 1, oxygen-free pyrolysis is used to remove binder, so as to separate positive-electrode active materials from current collectors.

7. The method of any preceding claim, wherein the Step 1 includes physical sorting, by which metal sheets of current collectors are sorted out, and the left is the mixture of powders which contains positive-electrode materials.

8. The method of any preceding claim, wherein the Step 1 does not separate positive electrode material from negative electrode material, so the mixture of powders obtained in Step 1 contains both the positive electrode materials and carbon.
